Europäisches Patentamt

European Patent Office

Office européen des brevets

(19)

(11) Veröffentlichungsnummer: **0 273 483**
**A1**

## EUROPÄISCHE PATENTANMELDUNG

(21) Anmeldenummer: **87202297.5**

(22) Anmeldetag: **24.11.87**

(51) Int. Cl.⁴ **H02K 16/00** , **H02K 21/18** , **A47J 43/08**

(30) Priorität: **26.11.86 DE 3640397**

(43) Veröffentlichungstag der Anmeldung:
**06.07.88 Patentblatt 88/27**

(84) Benannte Vertragsstaaten:
**AT CH DE ES FR GB IT LI**

(71) Anmelder: **Philips Patentverwaltung GmbH**
**Wendenstrasse 35 Postfach 10 51 49**
**D-2000 Hamburg 1(DE)**

(84) **DE**

(71) Anmelder: **N.V. Philips' Gloeilampenfabrieken**
**Groenewoudseweg 1**
**NL-5621 BA Eindhoven(NL)**

(84) **CH ES FR GB IT LI AT**

(72) Erfinder: **Bertram, Leo**
**Am Sender 10**
**D-5190 Stolberg(DE)**
Erfinder: **Schemmann, Hugo, Dr.**
**Zwartebergweg 6**
**NL-6371 XD Schaesberg(NL)**
Erfinder: **Bukoschek, Romuald Leander**
**Dr. Palla-Gasse 28**
**A-9020 Klagenfurt(AT)**

(74) Vertreter: **Kupfermann, Fritz-Joachim,**
**Dipl.-Ing. et al**
**Philips Patentverwaltung GmbH**
**Wendenstrasse 35 Postfach 10 51 49**
**D-2000 Hamburg 1(DE)**

(54) **Antriebsvorrichtung für ein kleines Haushaltsgerät.**

(57) Eine Antriebsvorrichtung für ein kleines elektrisch angetriebenes Gerät, wie einen Zerkleinerer, ein Schnitzelwerk, eine Pumpe, ein Hobbygerät, hat mit mindestens zwei Antriebsmotoren (251, 252), die über ein gemeinsames Getriebezahnrad (19) die Arbeitswelle einer Last antreiben. Die Last wird direkt oder über weitere Zahnräder von den Rotorwellen aller als zweipolige Einphasensynchronmotoren (251, 252) mit permanentmagnetischem Rotor (271, 272) ausgebildeten Antriebsmotoren (251, 252) angetrieben, wobei auf den Rotorwellen angebrachte Zahnräder (211, 212) hinsichtlich der magnetischen Polarisierungsrichtung (531, 532) der Rotormagneten (271, 272) so orientiert sind, daß bei montierter und einkämmender Anordnung die magnetische Orientierung (531, 532) aller Rotoren (271, 273) in bezug auf die Hauptrichtung (541, 542) der Statorfelder bei positivem Statorstrom gleich ist.

EP 0 273 483 A1

Fig.1

## Antriebsvorrichtung für ein kleines Haushaltsgerät

Die Erfindung bezieht sich auf eine Antriebsvorrichtung für ein kleines elektrisch angetriebenes Gerät, wie einen Zerkleinerer, ein Schnitzelwerk, eine Pumpe, ein Hobbygerät, mit mindestens zwei Antriebsmotoren, die über ein gemeinsames Getriebezahnrad die Arbeitswelle einer Last antreiben.

Es sind kleine Haushaltsgeräte, wie beispielsweise Zitruspressen, Dosenöffner usw., bekannt, die von zweipoligen Einphasensynchronmotoren angetrieben werden. Diese Motoren weisen eine Reihe von Vorteilen auf, wie kompakte Bauweise und hohe Leistung pro Volumen. Bei einer Beschränkung der Produktion auf wenige Motortypen läßt sich deren Herstellung automatisieren und der Herstellungspreis außerordentlich wirtschaftlich gestalten. Durch die Massenproduktion von nur wenigen Motortypen läßt sich aber nicht das ganze Bedarfsspektrum abdecken. Die in Massenproduktion gefertigten Typen sind auf ein Leistungsspektrum ausgerichtet, das in einer ganzen Reihe von Geräten einsetzbar ist.

Ein Motortyp, der sich in der Praxis als sehr erfolgreich erwiesen hat, ist ein Einphasensynchronmotor von etwa 10 W Abgabeleistung an der Rotorwelle. Ist die Leistung dieses Motors zu gering und wird erwogen, einen Einphasensynchronmotor doppelter Leistung, ca. 20 W Abgabeleistung, an der Rotorwelle herzustellen, dann verlangt diese Verdoppelung der Leistungsabgabe an der Rotorwelle mehr als nur eine Änderung der Dimensionierung in Richtung auf eine Verdoppelung der Abgabeleistung. Für die Produktion müßte eine neue Produktionslinie aufgebaut werden mit neuen bzw. abgewandelten Maschinen für die Herstellung der Bleche, das Wickeln der Spulen usw.. Die Einführung eines neuen Motortyps würde damit insgesamt den zu betreibenden Aufwand beträchtlich erhöhen, insbesondere wenn ein solcher Motor nur für ein bestimmtes Produkt in begrenzter Stückzahl und nicht für eine Produktpalette einsetzbar ist, so daß sich der Aufwand für eine neue automatisierte Fertigungslinie nicht lohnt.

Aus der EP-Patentanmeldung 127 050 ist es bekannt, eine Küchenmaschine mit wenigstens zwei Elektromotoren anzutreiben, die über Schneckenwellen auf ein gemeinsames Schneckenzahnrad arbeiten. Derartige Schneckengetriebe haben eine außerordentlich starke Selbsthemmung und erhöhen damit den Leistungsbedarf. Würde man aus Leistungs-und Kostengründen die Antriebsmotoren als Einphasensynchronmotoren ausbilden, dann ergäbe sich die Schwierigkeit, daß die Synchronmotoren bei starker Belastung an der Antriebswelle überhaupt nicht starten. Des weiteren ist festzustellen, daß bei willkürlicher Konstruktion und Anordnung eines derartigen Mehrmotorenantriebes bei Verwendung von Einphasensynchronmotoren das Anlaufen der Geräte schwierig ist und in vielen Fällen nicht gelingt. Das Gerät führt vielmehr eine chaotische Bewegung mit viel Lärm und Vibrationen aus oder bleibt überhaupt stehen.

Es ist Aufgabe der Erfindung, eine Antriebsvorrichtung der eingangs erwähnten Art derart reibungsarm zu gestalten, daß im Prinzip als Antriebsmotoren Einphasensynchronmotoren einsetzbar sind und eine Konstruktions-und Einbauvorschrift anzugeben, die einen sicheren Anlauf und Betrieb gewährleistet.

Die gestellte Aufgabe ist dadurch gelöst, daß ein reibungsarmes Stirnrad-Getriebe, bestehend aus einem mit der Last gekoppelten Antriebszahnrad und damit kämmenden Zahnrädern auf den Rotorwellen aller als zweipolige Einphasensynchronmotoren mit permanentmagnetischem Rotor ausgebildeten Antriebsmotoren eingesetzt ist, wobei die auf den Rotorwellen angebrachten Zahnräder hinsichtlich der magnetischen Polarisierung der Rotormagneten so orientiert sind, daß bei montierter und einkämmender Anordnung die magnetische Orientierung aller Rotoren in bezug auf die Hauptrichtung der Statorfelder bei positivem Statorstrom gleich ist, wodurch sichergestellt ist, daß im montierten Zustand und bei stromlosen Statorspulen die sich aufgrund des magnetischen Klebemomentes einstellende Ruhelage $\theta = \theta_0$ erhalten bleibt, wobei $\theta$ eine die Rotorwinkelposition gegenüber der Hauptrichtung des Statorfeldes kennzeichnende Koordinate ist, und daß alle Motoren bei Einschalten der Spannung ein Moment in gleicher Richtung erfahren. $\theta$ ist hierbei gleich Null, wenn die Magnetisierungsrichtung des Rotors und die Hauptrichtung des Statorfeldes antiparallel sind. Ein positiver Statorstrom dreht den Rotor dann in positiver Richtung. Die positive Richtung ist dann diejenige, in der bei Drehung des Rotors zunächst der mit den Spulen gekoppelte Permanentmagnetfluß maximal ist und danach um einen kleinen Winkel versetzt das magnetische Klebemoment, das der Rotor auch bei stromlosen Statorspulen erfährt, gleich 0 wird und der Rotor dort eine stabile Ruhelage einnimmt. Die Verbindungslinien der Rotorzahnradachse mit der Antriebs-(Zwischen-)Zahnradachse bilden miteinander einen Winkel $\alpha$ , der ein Vielfaches $n'$ des Teilungswinkels $\alpha_2$ ist, miteinander bilden, wobei der Teilungswinkel $\alpha_2$ des Antriebszahnrades

$$\alpha_2 = \frac{\pi \cdot m}{r_2}$$

2

ist, wobei $r_2$ der Radius des Antriebszahnrades und m dessen Modul ist, wobei n' so groß gewählt ist, daß sich die Rotorzahnräder im Lauf nicht behindern und wobei sich der Wert von n' bestimmen läßt aus der Beziehung

$$\frac{\pi}{90} \ arc \ sin \ \frac{\frac{m \cdot z_1}{2} + K}{\frac{m}{2}(z_1 + z_2)} < n' \cdot \alpha_2 < 2\pi - \frac{\pi}{90} \ arc \ sin \ \frac{\frac{m \cdot z_1}{2} + K}{\frac{m}{2}(z_1 + z_2)}$$

wobei

$z_1$ = Zähnezahl der Motorzahnräder,

$z_2$ = Zähnezahl des gemeinsamen Antriebszahnrades,

K = Zahnkopfhöhe ist,

wobei alle Längenmaße in Millimeter gemessen sind und n' nicht ganzzahlig zu sein braucht.

Der Wert von n' hängt außerdem ab von der Orientierung der Statormittellinien und der Anordnung der Zahnräder auf den Rotoren und braucht nicht ganzzahlig zu sein.

Auf diese Weise ist es möglich, die Rotoren von wenigstens zwei Einphasensynchronmotoren auf ein gemeinsames Antriebszahnrad arbeiten zu lassen. Die Einphasensynchronmotoren können dabei, wenn beispielsweise die Endleistung 20 W sein soll, für eine Einzelleistung von 10 W ausgelegt sein und aus einer Großserienfertigung für die gängigeren 10 W-Motoren übernommen werden. Bei Beachtung der Rotorkonstellationen in bezug auf die Statorhauptfeldachsen, der Zahnradorientierung auf den Rotoren und der Spulenanschlüsse untereinander ist ein einwandfreier Anlauf und Betrieb sichergestellt.

Bei der Dimensionierung ist zunächst darauf zu achten, daß die grundlegenden Getriebegesetze nicht verletzt werden. Bei gegebener Teilkreisteilung $t_0$, mit

$$t_0 = \alpha_1 \cdot r_1 = \alpha_2 \cdot r_2 ,$$

und dem Übersetzungsverhältnis ü, mit

$$ü = r_1/r_2 ,$$

ist

$$\alpha_2 = \alpha_1 \cdot ü .$$

Hierbei ist $\alpha_1$ der Teilungswinkel der Rotorzahnräder mit

$$\alpha_1 = \frac{\pi \cdot m}{r_1}$$

$\alpha_2$ der Teilungswinkel des Antriebszahnrades mit

$$\alpha_2 = \frac{\pi \cdot m}{r_2}$$

$r_1$ der Teilkreisradius der Rotorzahnräder, $r_2$ der Teilkreisradius des Antriebszahnrades und m der Modul.

Bei einer gegebenen Orientierung der Statormittellinien ist beim Anbringen der Zahnräder auf den Rotoren darauf zu achten, daß diese bei in sämtlichen Motoren gleicher Rotorstellung in bezug auf die Statorhauptfeldrichtung, das ist bei gleichem Winkel $\theta$, in das Antriebszahnrad einkämmen können. Dies gilt auch für den Ruhewinkel $\theta = \theta_0$, den die Rotoren frei einnehmen, wenn kein Strom fließt.

Solange diese Bedingung bei dem Winkel

$$\dot{\alpha} = n \cdot ü \cdot \alpha_1$$

3

erfüllt ist, ist ein befriedigender Betrieb möglich.

Aus diesen Lagen heraus lassen sich bei gleicher Position der Zahnradachsen, solange die Verdrehung in gleicher Richtung erfolgt und gleich groß ist, die Statoren um beliebige Winkel verdrehen.

Bei festliegender Orientierung der Zahnräder auf den Rotoren ändert sich durch ein Verdrehen der Rotorzahnräder um den Teilungswinkel $\alpha_1$ oder ein ganzes Vielfaches k davon in beliebiger Richtung und gleichzeitige Verdrehung der zugehörigen Statoren im gleichen Drehsinn wie das zugehörige Zahnrad bei festgehaltener Position der Zahnradachsen nichts an den Einkämmverhältnissen und der relativen Lage der Rotormagnetisierungsrichtung im Hinblick auf die Statorhauptfeldrichtung. Hierdurch ist es möglich, die Statoren durch Verdrehung um ein ganzes Vielfaches k des Teilungswinkels $\alpha_1$ in beliebiger Richtung in eine für die Konstruktion und Formgebung günstige Lage zueinander und innerhalb des Gerätes zu bringen.

Aus der US-PS 42 08 620 ist es bekannt, zwei Hochleistungssynchronmotoren mit gewickelten Rotoren auf ein gemeinsames Antriebsstirnzahnrad arbeiten zu lassen. Der Anlauf ist bei diesen Motoren unproblematisch hinsichtlich der Reibungsmomente und des dynamischen Verhaltens, weil sie durch Fremdantrieb oder über Hilfswicklungen hochgefahren werden. Die gleichmäßige Lastverteilung auf die zwei Motoren stellt dabei ein Problem dar, welches durch Ausgleichswicklungen gelöst wird.

Nach einer weiteren Ausgestaltung der Erfindung ist vorgesehen, daß bei der Herstellung jedes Rotors das Zahnrad auf dem Mitnehmerende seiner Welle hinsichtlich der Magnetisierungsrichtung des Rotormagneten bei allen Motoren die gleiche Zahnorientierung hat. Auf diese Weise ist sichergestellt, daß alle Zahnräder auf den einzelnen Rotorwellen eine feste Zuordnung der Zahnung zu der Magnetisierungsrichtung des Rotormagneten haben. Wenn nun das gemeinsame Antriebszahnrad hinsichtlich seiner Zahngeometrie so gestaltet ist, daß die Zahnräder der einzelnen Rotorwellen sich bei gegebener geometrischer Lage der Zahnradachsen beim Einfügen in das gemeinsame Zahnrad nicht verdrehen, dann ist auch die magnetische Orientierung der einzelnen Rotoren bei richtig angeschlossenen Statorspulen zusammengestellten Zustand des Gesamtgetriebes aufeinander abgestimmt.

Geht man von einer Anordnung aus, bei der die Verbindungslinien von Rotorzahnradachsen und Antriebszahnradachse und die Statormittellinien die gleiche Richtung haben, so bilden die Statormittellinien einen Winkel miteinander, der gleich dem Winkel $\alpha$ ist.

Damit die Rotorzahnradzähne passend in das Antriebszahnrad einkämmen, kann bei einer derartigen zur Winkelhalbierenden des Winkels $\alpha$ symmetrischen Anordnung mit einem Antriebszahnrad und zwei auf identische Weise auf zwei Magnetrotoren angebrachten Rotorzahnrädern der Faktor n nur ganzzahlige Werte haben, und der Winkel $\alpha$ nur diskrete, vom Teilungswinkel $\alpha_1$, dem Übersetzungsverhältnis ü und dem Faktor n abhängige Werte annehmen.

$$\alpha = n \cdot \ddot{u} \cdot \alpha_1 = n \cdot \alpha_2 ,$$

wobei n ganzzahlig ist. Selbstverständlich bleiben im übrigen die oben beschriebenen Verdrehungsmöglichkeiten aus dieser Ausgangslage heraus erhalten.

Unter diesen Umständen, d. h. bei symmetrischer Anordnung und identisch auf den Rotoren angebrachten Zahnrädern läßt sich z. B. bei gegebener Dimensionierung der Rotorzahnräder mit m, $r_1$ und $\alpha_1$ in einfacher Weise bei fest vorgegebenem Übersetzungsverhältnis ü durch Wahl des Faktors n das Antriebszahnrad so dimensionieren, daß der Winkel $\alpha$ und die Abstände der Zahnradlager der gewünschten Geometrie in guter Näherung entsprechen.

In ähnlicher Weise lassen sich bei gegebenem Winkel $\alpha$ und für eine vorliegende Rotorzahnraddimensionierung durch Wahl des Faktors n und Anpassung des Übersetzungsverhältnisses ü die geometrischen Abmessungen den Anforderungen anpassen. Es ist hierbei

$$\ddot{u} = \frac{\alpha}{n \cdot \alpha_1}$$

Komplizierter wird die Situation, wenn die Richtung der Statormittellinien vorgeschrieben ist in der Art, daß diese zwar symmetrisch zur Winkelhalbierenden zwischen den Verbindungslinien der Rotorzahnradachsen und der Antriebszahnradachse verlaufen, mit der Winkelhalbierenden aber einen Winkel $\epsilon$ bilden, der ungleich $\alpha/2$ ist. Bezeichnet man den Fehlwinkel zur $\alpha$-Richtung mit $\beta$, so gilt die Beziehung:

$$\frac{\alpha}{2} = \beta + \epsilon$$

Der Winkel $\beta$ läßt sich aufteilen in ein ganzes Vielfaches k des Teilungswinkels $\alpha_1$ und einen verbleibenden Restwinkel $\delta$ , so daß gilt:

$$\frac{\alpha}{2} = k \cdot \alpha_1 + \delta + \epsilon$$

(Wenn $\epsilon > \frac{\alpha}{2}$ ist, muß $\beta$ negativ eingesetzt werden.)

Nur wenn $\delta$ gleich Null ist, lassen sich bei gegebenem $\alpha_1$ und $\epsilon$ durch Wahl von k und n die Bedingungen

$$\alpha = n \cdot \alpha_1 \cdot ü$$

und

$$\alpha = 2 \cdot k \cdot \alpha_1 + 2\epsilon$$

für beide Rotorzahnräder symmetrisch in der Art erfüllen, daß die Rotororientierung hinsichtlich ihrer Magnetisierungsrichtung innerhalb der Statorbohrung gleich ist. Hierzu muß das eine Rotorzahnrad gegenüber der Ausgangsposition $2\epsilon = \alpha$ in positiver Rotordrehrichtung um ein ganzes Vielfaches k des Teilungswinkels $\alpha_1$ und das andere Rotorzahnrad in negativer Richtung um ein Vielfaches k des Teilungswinkels $\alpha_1$ versetzt einkämmen. Entsprechend werden auch die Statormittellinien um das gleiche Vielfache des Teilungswinkels $\alpha_1$ in positiver und negativer Richtung auf die Winkelhalbierende zu verdreht. Der Faktor k kann hierbei für beide Motoren unterschiedliche Werte haben. Die Statormittellinien liegen dann jedoch nicht mehr symmetrisch zur Winkelhalbierenden von $\alpha$.

Den obigen Ausführungen zufolge müssen entweder der Winkel $\alpha$ oder der Winkel $\epsilon$ der obigen Bedingung angepaßt werden. Außerdem muß das Übersetzungsverhältnis den dort vorgeschriebenen Wert haben.

Ist der Winkel $\alpha$ vorgegeben, so ist mit dem Winkel $\epsilon$ die Richtung der Statormittellinie bei gegebenem Teilungswinkel $\alpha_1$ nicht mehr frei. Umgekehrt bestimmt bei festgelegtem $\alpha_1$ ein vorgegebenes $\epsilon$ bis auf den Faktor k den Winkel $\alpha$ . Der Sonderfall

$$\alpha = 2\epsilon$$

ergibt sich für k = 0.

Das Übersetzungsverhältnis

$$ü = \frac{\alpha}{n \cdot \alpha_1}$$

muß durch passende Wahl von n dem angestrebten Wert möglichst gut angenähert werden. n ist hierbei ganzzahlig.

Für den Fall, daß die Statormittellinien parallel zur Winkelhalbierenden verlaufen und $\epsilon$ damit gleich Null ist, ergibt sich:

$$ü = \frac{2 \ k}{n}$$

In diesem Fall wird $\alpha$ bestimmt durch die Beziehung

$$\alpha = \frac{2k \ m \ \pi}{r_1}$$

Hierbei sind k und n ganzzahlig.

Ist $\alpha$ vorgegeben, so können durch geeignete Wahl des Moduls m oder durch entsprechende Änderungen der Radien der Rotorzahnräder und des Antriebszahnrades um den gleichen Faktor die obigen Bedingungen erfüllt werden.

5

Unabhängig von der weiteren Auslegung sind hier also nur eine begrenzte Zahl von zulässigen Übersetzungen möglich.

Weicht man von diesen Richtlinien ab, so verdrehen sich die Rotoren auch bei einkämmenden Zahnrädern innerhalb der Statoren, und es entstehen Phasenverschiebungen zwischen den Momenten der beiden Motoren, und die Verhältnisse werden im allgemeinen ungünstiger. Das gesamte kritische Klebemoment in der Rotorstellung, in der das gesamte Strommoment gleich Null ist, wird kleiner, und die Kippleistung wird bei in Reihe geschalteten Motoren ebenfalls kleiner. Die Zahnbelastung und das Geräusch werden größer, weil die Motoren zum Teil gegeneinander arbeiten. Dem steht allerdings gegenüber, daß die insgesamt auf die Last wirkenden Drehmomentschwankungen bei passender Wahl des Verdrehungswinkels kleiner werden können.

Es versteht sich von selbst, daß abhängig von Toleranzen und Spielen ein Betrieb auch noch möglich ist, wenn die Zahnräder nicht sauber einkämmen, die obigen Richtlinien also nicht voll erfüllt sind. Diese Richtlinien sollten jedoch vorzugsweise so gut wie möglich eingehalten werden. Geringe Abweichungen in der Auslegung beruhen jedoch auf denselben grundsätzlichen Zusammenhängen.

Sinngemäß gelten die Überlegungen auch für nichtsymmetrische Anordnungen. Auch hier lassen sich auf obigen grundsätzlichen Zusammenhängen beruhende Richtlinien ableiten.

Insbesondere können in allen Fällen, in denen beide Winkel $\alpha$ und $\epsilon$ vorgegeben sind und $\delta$ ungleich Null sind, durch verdrehte Anbringung der Rotorzahnräder auf den Rotoren die Einkämmbedingungen erfüllt werden. Desgleichen können durch Anpassung des Winkels $\alpha$ an die Richtung der Statormittellinien die Einkämmbedingungen bei gleichem Winkel $\theta$ bei beiden Motoren erfüllt werden.

Nach einer weiteren Ausgestaltung der Erfindung ist vorgesehen, daß die Motoren mit einer ihre Polarisierung kennzeichnenden Markierung versehen sind. Montagefehler auf der Fertigungsstraße lassen sich auf diese Weise offensichtlich vermeiden.

Nach einer weiteren Ausgestaltung der Erfindung ist vorgesehen, daß beim Einsatz von für 110 V ausgelegten Motoren für eine Betriebsspannung von 220 V die Wicklungen von immer zwei Motoren bei 220 V Netzspannung in Reihe schalt bar sind. Durch die Möglichkeit der Umschaltung von Reihen-auf Parallelschaltung ist es möglich, mit Betriebsspannungen von sowohl 220 V als auch 110 V zu arbeiten ohne Wicklungsveränderung. Für den Export von Geräten in Länder mit Netzspannung von 110 V läßt sich so ohne prinzipielle Veränderung des auf der Fertigungslinie produzierten einheitlichen Motors die Netzspannungsumschaltbarkeit mit geringstem technischem Aufwand realisieren.

Nach einer weiteren Ausgestaltung der Erfindung ist ein Verfahren zum Zusammenbau einer Antriebsvorrichtung der zuvor beschriebenen Art dadurch gekennzeichnet, daß die Rotoren vor ihrem Kuppeln mittels eines Gleichspannungsimpulses in die gewünschte Orientierung hinsichtlich der Statorgeometrie gebracht werden. Auf diese Weise läßt sich ein Bereitstellen von Motoren mit gleicher Orientierung der Rotorstellung am Montageplatz vollautomatisch sicherstellen, wobei die Montage durch eine optische Kontrolle mittels der Farbmarkierung der Polarisationsrichtung des Rotors unterstützt werden kann.

Die Erfindung wird anhand der in den Zeichnungen dargestellten Ausführungsbeispiele näher erläutert. Es zeigen:

Fig. 1 eine Prinzipskizze der Motor-Zahnradanordnung zur Erläuterung der Winkelbeziehungen,

Fig. 2 den Schnitt nach Fig. 3 eines Ausführungsbeispiels für zwei parallel arbeitende Einphasensynchronmotoren,

Fig. 3 ein Ausführungsbeispiel nach Fig. 2 in Draufsicht,

Fig. 4 ein anderes Ausführungsbeispiel mit zwei parallel nebeneinander arbeitenden Einphasensynchronmotoren in Draufsicht,

Fig. 5 die Ausführungsform nach Fig. 4 in Seitenansicht,

Fig. 6 eine weitere Ausführungsform eines Zweimotorenantriebes.

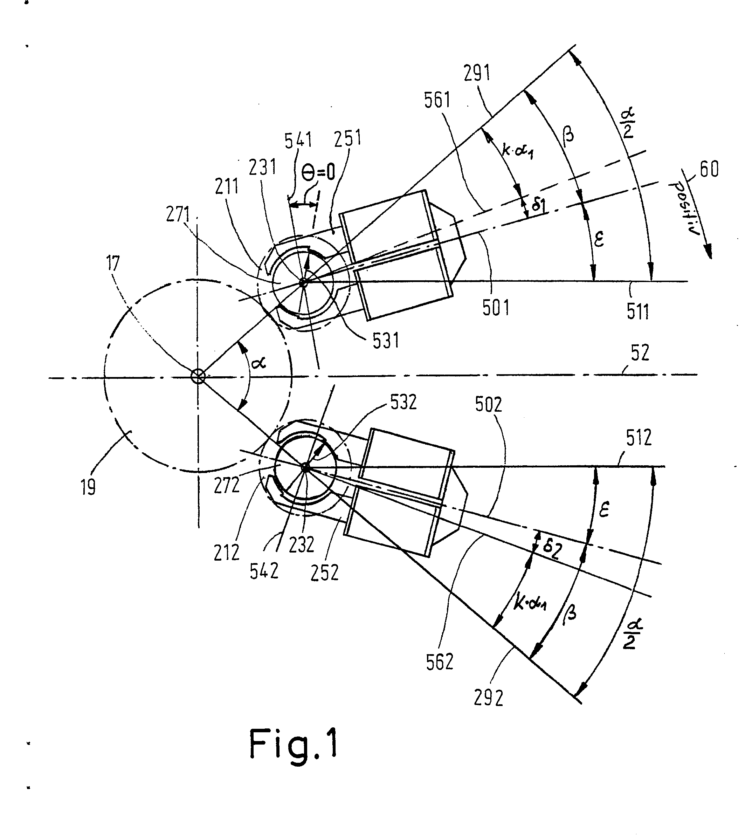

Fig. 1 zeigt eine Prinzipskizze der Motor-Zahnradanordnung zur Erläuterung der Winkelbeziehungen. Dargestellt sind Lage der Winkel $\beta$, $\epsilon$ und $\delta$ sowie die Richtung der Rotormagnetisierung 531/532 hinsichtlich der magnetischen Statorfeldrichtung 541/542 in Ruhelage des Rogors bei $\theta = \theta_0$. Der Winkel $\beta$ erstreckt sich zwischen den Verbindungslinien 291/292 der Achse 17 des Antriebszahnrades 19 und den Achsen 231/232 der Rotorzahnräder 211/212 und den Statormittellinien 501/502 der Motoren 251/252.

Parallel zur Winkelhalbierenden 52 des Winkels $\alpha$ verlaufen durch die Achsen 231/232 der Zahnräder 211/212 die Linien 511/512. Der Winkel $\epsilon$ wird in der dargestellten Weise zwischen den Statormittellinien 501/502 und den Parallelen 511/512 zur Winkelhalbierenden 52 gebildet.

Die Statormittellinie 501 des Synchronmotors 251 ist aus der symmetrischen Normalposition, in der die Statormittellinie 501, 502 sich in Richtung der Verbindungslinie 291, 292 der Zahnradachse 17 und der Motorzahnradachsen 231, 232 erstreckt, um den Winkel $\beta$, der bei Fehlwinkel $\delta = 0$ ein ganzzahliges Vielfaches k des Teilungswinkels $\alpha_1$ ist, in positiver Richtung, die durch einen Pfeil 60 angedeutet ist, gegenüber der Verbindungslinie 291 der Achsen 17 und 231 verdreht. Auch das Zahnrad 211 und damit der zugehörige Rotor 271 mit seiner Magnetisierungsrichtung 531 ist um das gleiche Vielfache k des Teilungswinkels $\alpha_1$ in positiver Richtung mitverdreht.

Die Statormittellinie 502 des Synchronmotors 252 ist ebenfalls um den Winkel $\beta$, der bei Fehlwinkel $\delta$ = 0 ein ganzzahliges Vielfaches k des Teilungswinkels $\alpha_1$ ist, aber in negativer Richtung gegenüber der Verbindungslinie 292 der Achsen 17 und 232 verdreht. Auch das Zahnrad 212 und damit der zugehörige Rotor 272 mit seiner Magnetisierungsrichtung 532 ist um das gleiche Vielfache k des Teilungswinkels $\alpha_1$ ebenfalls in negativer Richtung mitverdreht.

Der Fehlwinkel $\delta$ ergibt sich, wenn $\beta$ kein ganzes Vielfaches k des Teilungswinkels $\alpha_1$ ist. Er wird durch die Statormittellinien 501/502 und den Linien 561/562 eingeschlossen. Bei einer symmetrischen Anordnung und gleichartig auf den Rotoren 271/272 angebrachten Zahnrädern muß $\delta$ gleich Null sein. Im folgenden wird angenommen, daß dies der Fall ist.

Prinzipiell kann der Faktor k für beide Motoren unterschiedliche Werte haben. Auch die Verdrehungsrichtung ist beliebig, solange gewährleistet bleibt, daß die Rotoren mit den darauf in gleicher Art angebrachten Zahnrädern in gleicher Richtung und um den gleichen Winkel wie die zugehörigen Statoren verdreht werden, so daß der Lagewinkel 0 bei beiden Motoren im montierten Zustand gleich ist. In diesem Fall ist jedoch die Symmetrie zur Winkelhalbierenden nicht mehr vorhanden.

Die Verbindungslinien 291/292 der Rotorzahnradachsen 231/232 der Einphasensynchronmotoren 251/252 und der Achse 17 des Antriebszahnrades 19 schließen einen Winkel $\alpha$ ein, der hier ein ganzes Vielfaches n des Teilungswinkels $\alpha_2$ des Antriebszahnrades 19 ist. Dieser Winkel $\alpha$ läßt sich definieren als

$$\alpha = n \cdot \alpha_2 = n \frac{\pi \cdot m}{r_2}.$$

bzw.

$$\alpha = n \cdot \alpha_2 = n \frac{\pi \cdot m \cdot ü}{r_1}$$

$$= n \cdot \alpha_1 \cdot ü$$

$r_2$ ist dabei der Teilkreisradius des Antriebszahnrades 19,
$r_1$ der Teilkreisradius der Rotorzahnräder 211, 212,
ü das Übersetzungsverhältnis,
m der Modul der Zahnräder und
$\alpha_1$ der Teilungswinkel der Rotorzahnräder.
n muß so groß sein, daß sich die Zahnräder 211/212 im Lauf nicht behindern. Der Wert der Zahl n läßt sich bestimmen aus der Beziehung

$$\frac{\pi}{90} \arcsin \frac{\frac{m \cdot z_1}{2} + K}{\frac{m}{2}(z_1 + z_2)} < n' \cdot \alpha_2 < 2\pi - \frac{\pi}{90} \arcsin \frac{\frac{m \cdot z_1}{2} + K}{\frac{m}{z}(z_1 + z_2)}$$

wobei $z_1$ die Zähnezahl der Zahnräder 211/212, $z_2$ die Zähnezahl des Antriebszahnrades 19 und K die Zahnkopfhöhe ist.

Bei einer, wie dargestellt, symmetrischen Anordnung mit gleichzeitig auf den Magnetrotoren angebrachten Zahnrädern ist n ganzzahlig.

Wenn die beiden einzelnen Einphasensynchronmotoren 251/252 für eine Netzspannung von 110 V ausgelegt sind, dann werden sie bei einem 110 V-Netz parallelgeschaltet. Führt das Netz jedoch 220 V, dann werden die Motoren in Reihe geschaltet, so daß sie für diese Netzspannung geeignet sind.

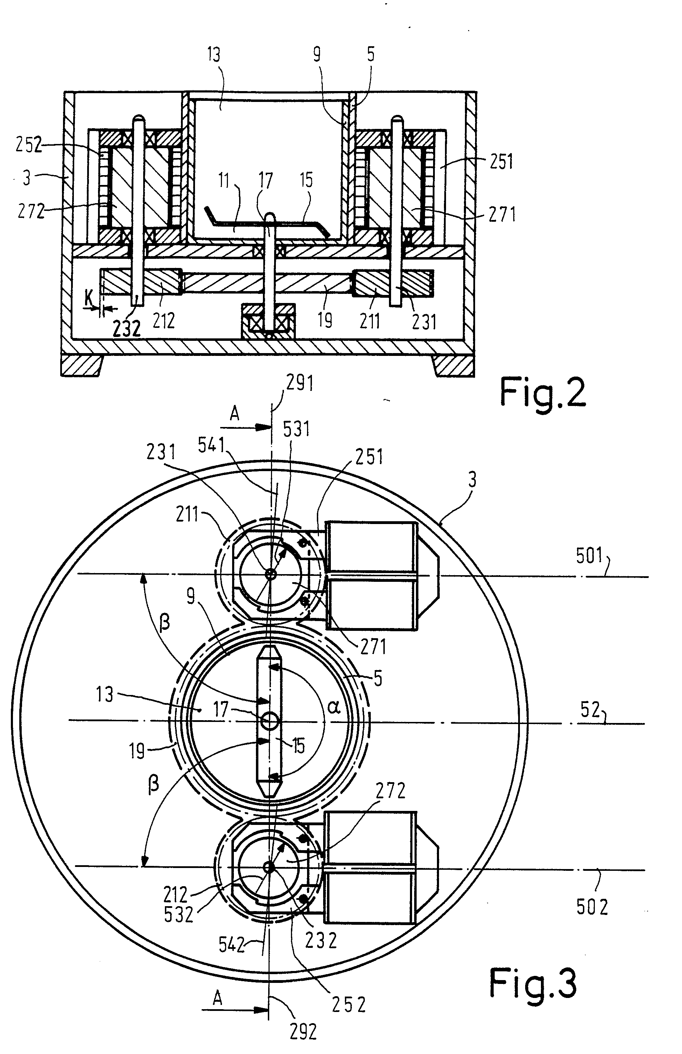

Das in Fig. 2 dargestellte Ausführungsbeispiel eines Zerkleinerungsgerätes für Haushaltszwecke weist einen Grundkörper 3 auf, der mit einer zentralen, nach oben offenen Aufnahme 5 für einen Zerkleinerungsbecher 9 versehen ist. Im Bodenbereich 11 des Becherinnenraumes 13 kann ein Schlagmesser 15 umlaufen, das mittels einer Welle 17 antreibbar ist.

Die Welle 17 trägt ein Antriebszahnrad 19, welches mit Rotorzahnrädern 211/212 kämmt. Die Rotorzahnräder 211/212 sind drehfest auf den Wellen 231/232 von Einphasensynchronmotoren 251/252 angeordnet. Die Wellen 231/232 tragen die dauermagnetischen, zylindrischen Rotoren 271/272 der Einphasensynchronmotoren 251/252.

Fig. 3 zeigt zur besseren Anschaulichkeit die Draufsicht auf das Ausführungsbeispiel nach Fig. 2. Das Getriebe des Gerätes, bestehend aus dem Antriebszahnrad 19 und den mit ihm kämmenden Rotorzahnrädern 211/212, ist reibungsarm ausgelegt, indem eine Stirnradverzahnung vorgesehen ist. Die auf den Rotorwellen angebrachten Zahnräder 211/212 sind hinsichtlich der magnetischen Polarisierung 531/532 der Rotormagnete 271/272 so orientiert, daß bei montierter und einkämmender Anordnung die magnetische Orientierung 531/532 aller Rotoren 271/272 in bezug auf die Hauptrichtung des Statorfeldes 541/542 bei positivem Statorstrom gleich ist. Im montierten und einkämmenden Zustand und bei stromlosen Statorspulen muß darüber hinaus sichergestellt sein, daß die sich aufgrund der magnetischen Klebemomente einstellende Ruhelage $\theta = \theta_0$ erhalten bleibt, wobei $\theta$ eine die Rotorwinkelposition gegenüber der Hauptrichtung des Statorfeldes 541/542 kennzeichnende Koordinate ist. Weiterhin muß sichergestellt sein, daß beim Einschalten der Spannung alle Motoren ein Moment in gleicher Richtung erfahren.

Bei der Herstellung der Rotoren 271/272 mit Rotorwellen 231/232 und Zahnrädern 211/212 ist es wichtig, daß die Zahnorientierung der Zahnräder 211/212 der Magnetisierungsrichtung 531/532 der Rotormagneten 271/272 angepaßt ist. Die Zuordnung von Zahnorientierung und Rotormagnetorientierung 531/532 läßt sich beim Einbringen der Rotorwellen ohne Schwierigkeiten in einer magnetischen Vorrichtung realisieren. In diesem Fall kann sichergestellt werden, daß alle Zahnräder 211/212 auf den einzelnen Rotorwellen 231/232 die gewünschte Zuordnung der Zahnung zu der Magnetisierungsrichtung 531/532 der Rotormagneten 271/272 haben.

Es muß dafür gesorgt sein, daß bei der Montage die Zahnräder 211/212 auf den einzelnen Rotorwellen 231/232 gegenüber dem Antriebszahnrad 19 nicht in eine ungewünschte Drehstellung verdreht werden, damit die Stellung der einzelnen Zahnräder 211/212 mit der zugeordneten Rotormagnetisierung 531/532 zu der Statorhauptfeldrichtung 541/542 paßt.

Das vorliegende Ausführungsbeispiel hat folgende Dimensionierungsdaten:
$\alpha = 180°$, $\beta = 90°$, $\epsilon = 0$, $\delta = 0$, $k = 7$, $n = 28$, $\ddot{u} = 1{:}2$, $z_1 = 28$, $z_2 = 56$, $m = 0{,}8$, $r_1 = 11{,}2$ mm, $r_2 = 22{,}4$ mm.

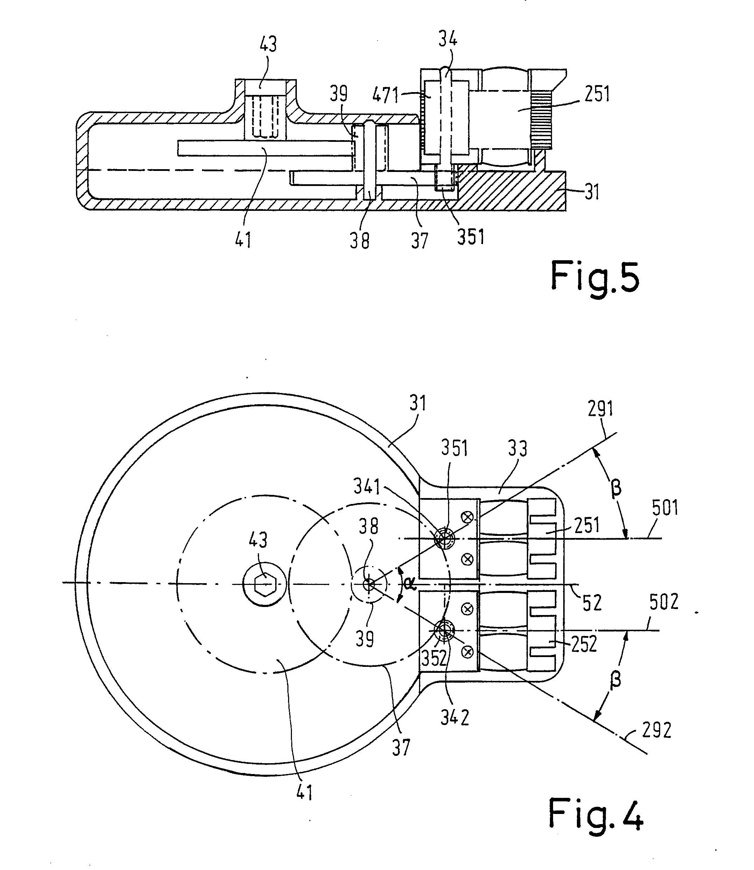

Fig. 4 zeigt ein anderes Ausführungsbeispiel, beispielsweise einer Zitruspresse. Der Grundkörper 31 weist dabei beispielsweise einen Handgriff 33 auf, in dem parallel nebeneinander zwei Einphasensynchronmotoren 251/252 angeordnet sind. Die Zahnräder 351/352 der Einphasensynchronmotoren 251/252 arbeiten beide mit Rotorwellen 341/342 auf ein Zwischenzahnrad 37, welches über ein Übergangszahnrad 39 das Antriebszahnrad 41 für die Gerätewelle 43 antreibt. Zwischenzahnrad 37 und Übergangszahnrad 39 sind gemeinsam um eine Achse 38 drehbar.

Fig. 5 zeigt den Grundkörper 31 teilweise im Schnitt und in Seitenansicht, wobei man einen der Synchronmotoren 251, den Rotor 371 des einen Einphasensynchronmotors 251 und die Übersetzungszahnräder 351, 37, 39 und 41 nach Fig. 4 erkennt.

Das Zwischenzahnrad 37 in Fig. 4 und 5 entspricht für das Antriebsystem dem Antriebszahnrad 19 nach Fig. 1, 2 und 3, die Achse 38 entspricht der Achse 17. Ähnlich entsprechen in Fig. 4 und 5 die Achsen 341/342 den Achsen 231/232, und die Zahnräder 351/352 den Zahnrädern 211/212 in Fig. 1, 2 und 3.

Die Verbindungslinien 291/292 der Achse 38 mit den Achsen 341/342 schließen einen Winkel $\alpha$ miteinander ein, dessen Winkelhalbierende die Linie 52 ist. Die Statormittellinien 501/502 der Synchronmotoren 251/252 sind parallel zur Winkelhalbierenden 52. Für den Winkel $\beta$ gilt somit:

$$\beta = \alpha/2,$$

und der Winkel $\epsilon$ ist gleich Null. Die Rotorzahnräder 351/352 sind in gleicher Weise mit den Rotoren 471/472 der Synchronmotoren montiert, und für das Übersetzungsverhältnis gilt:

$$\ddot{u} = \frac{2k}{n} \quad,$$

wobei $k$ und $n$ ganzzahlig sind.

Für das Ausführungsbeispiel nach Fig. 4 und 5 ergeben sich folgende Dimensionierungsdaten:
$\alpha = 60°$, $\beta = 30°$, $\epsilon = 0$, $r_1 = 2{,}4$ mm, $r_2 = 19{,}2$ mm, $\ddot{u} = 1{:}8$, $k = 1$, $n = 16$, $m = 0{,}4$, $z_1 = 12$, $z_2 =$

96.

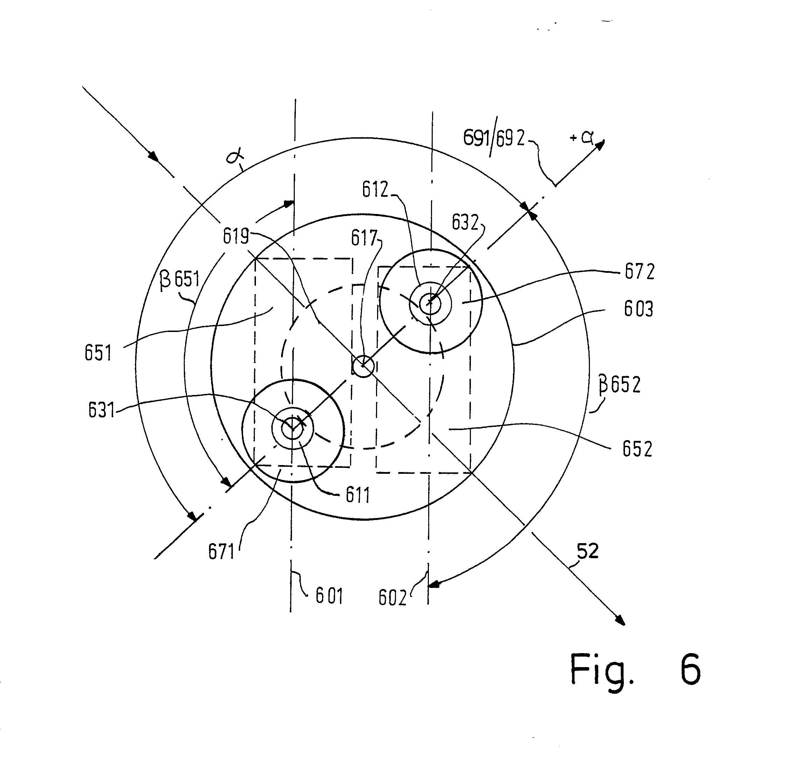

Fig. 6 zeigt das Aufbauprinzip eines weiteren Ausführungsbeispieles eines Allesschleifers. Die Synchronmotoren 651/652 sind antiparallel in einem Gehäuse 603 angeordnet. Die Rotorzahnräder 611 612 kämmen mit dem Antriebszahnrad 619. Unter Bezugnahme auf Fig. 1 weist dieses Ausführungsbeispiel folgende spezielle Dimensionierungsdaten auf:

$\alpha = 180°$, $\beta = 135°$, $\epsilon = -45°$

Die Linien 691/692, die die Achse 617 des Antriebszahnrades 619 mit den Achsen 631/632 der Motoren 651/652 verbinden, schließen den Winkel $\alpha$ ein und werden als Bezugsrichtung für den Verdrehungswinkel $\beta$ gewählt. Die Winkelhalbierende 52 des Winkels $\alpha$ gilt als Bezugslinie für den Winkel $\epsilon$ . Aus der Ausgangsposition, in der die Statormittellinien 601/602 mit der Verbindungslinie 692 zusammenfallen, werden in diesem Fall beide Motoren um den Winkel $\beta = 135°$ in gleicher Richtung verdreht. Der Winkel $\epsilon$ ist negativ, weil die Statormittellinien 601/602 um 45° über die Winkelhalbierende 52 hinaus verdreht werden. Auch hier ist die Beziehung

$$\frac{\alpha}{2} = \beta + \epsilon$$

erfüllt. Aus der beschriebenen Lage können beide Statoren, wie oben beschrieben, um einen beliebigen Winkel, der aber für beide Statoren gleich sein muß, in gleicher Richtung verdreht werden, ohne das Einkämmen zu beeinträchtigen.

Auch die anderen genannten Verdrehungsmöglichkeiten bleiben erhalten.

Die übrigen Daten, wie Zahnradradius und Modul, werden so gewählt, daß die Einkämmbedingungen erfüllt sind, und können denen der Ausführungsbeispiele nach Fig. 2 oder 4 entsprechen.

## Ansprüche

1. Antriebsvorrichtung für ein kleines elektrisch angetriebenes Gerät, wie einen Zerkleinerer, ein Schnitzelwerk, eine Pumpe, ein Hobbygerät, mit mindestens zwei Antriebsmotoren, die über ein gemeinsames Getriebezahnrad die Arbeitswelle einer Last antreiben, dadurch gekennzeichnet, daß ein reibungsarmes Stirnrad-Getriebe, bestehend aus einem mit der Last (15) direkt oder über weitere Zahnräder (39, 41) gekoppelten Antriebszahnrad (19, 37, 619) und damit kämmenden Zahnrädern (211/212, 351/352, 611/612) auf den Rotorwellen (231/232, 341/342, 631/632) aller als zweipolige Einphasensynchronmotoren mit dauermagnetischem Rotor ausgebildeten Antriebsmotoren (251/252, 651/652) eingesetzt ist, wobei die auf den Rotorwellen (231/232, 341/342, 631/632) angebrachten Zahnräder (211/212, 351/352, 611/612) hinsichtlich der magnetischen Polarisierungsrichtung (531/532) der Rotormagneten (271 272, 471/472, 671/672) so orientiert sind, daß bei montierter und einkämmender Anordnung die magnetische Orientierung (531/532) aller Rotoren (271/272, 471/472, 671/672) in bezug auf die Hauptrichtung der Statorfelder (541 542) bei positivem Statorstrom gleich ist, wodurch sichergestellt ist, daß im montierten und einkämmenden Zustand und bei stromlosen Statorspulen die sich aufgrund des magnetischen Klebemomentes einstellende Ruhelage $\theta = \theta_0$ erhalten bleibt, wobei $\theta$ eine die Rotorwinkelposition gegenüber der Hauptrichtung des Statorfeldes (541/542) kennzeichnende Koordinate ist, und daß alle Motoren (251/252, 651/562) bei Einschalten der Spannung ein Moment in gleicher Richtung erfahren und die Verbindungslinien (291/292, 691/692) der Rotorzahnradachse (231/232, 341/342 631/632) mit der Antriebs-(Zwischen-)Zahnradachse (17, 38, 617) einen Winkel $\alpha$ , der ein Vielfaches $n'$ des Teilungswinkels $\alpha_2$ ist, miteinander bilden, wobei der Teilungswinkel $\alpha_2$ des Antriebszahnrades (19, 37, 619)

$$\alpha_2 = \frac{\pi \cdot m}{r_2}$$

ist, wobei $r_2$ der Radius des Antriebszahnrades (19, 37, 619) und m dessen Modul ist, wobei $n'$ so groß gewählt ist, daß sich die Rotorzahnräder (211/212, 351/352, 611/612) im Lauf nicht behindern und wobei sich der Wert von $n'$ bestimmen läßt aus der Beziehung

$$\frac{\pi}{90} \text{ arc sin } \frac{\frac{m \cdot z_1}{2} + K}{\frac{m}{2}(z_1 + z_2)} < n' \cdot \alpha_2 < 2\pi - \frac{\pi}{90} \text{ arc sin } \frac{\frac{m \cdot z_1}{2} + K}{\frac{m}{z}(z_1 + z_2)}$$

wobei

$z_1$ = Zähnezahl einer Motorzahnrades,

$z_2$ = Zähnezahl des gemeinsamen Antriebszahnrades,

K = Zahnkopfhöhe ist

wobei n' nicht ganzzahlig zu sein braucht und alle Längenmaße in Millimeter gemessen sind.

2. Antriebsvorrichtung nach Anspruch 1, dadurch gekennzeichnet, daß bei der Herstellung jedes Rotors (271/272, 471/472, 672/672) das Zahnrad (211/212, 351/352, 611/612) auf seiner Welle (231/232, 341/342, 631/632) hinsichtlich der Magnetisierungsrichtung (531/532) der Rotormagneten (271/272, 471/472, 671/672) bei allen Motoren (251/252, 651/652) die gleiche Zahnorientierung hat und die Statormittellinien (501/502, 601/602) bei montierter und einkämmender Anordnung so orientiert sind, daß die magnetische Orientierung (531/532) aller Rotoren (271/272, 471/472, 671/672) in bezug auf die Hauptrichtung der Statorfelder (541/542) bei positivem Statorstrom gleich ist und daß alle Motoren (251/252, 651/652) bei Einschalten der Spannung ein Moment in gleicher Richtung erfahren.

3. Antriebsvorrichtung nach Anspruch 2, dadurch gekennzeichnet, daß die Anordnung symmetrisch zur Winkelhalbierenden (52) des Winkels $\alpha$ oder gegenüber dieser Stellung um ein ganzes Vielfaches k des Teilungswinkels $\alpha_1$ verdreht ist und gleichzeitig die Bedingungen erfüllt, daß

$$\alpha = n \cdot \alpha_1 \cdot \ddot{u},$$

und

$$\alpha = 2k \cdot \alpha_1 + 2\epsilon \text{ ist,}$$

und n ganzzahlig ist,

wobei

$\ddot{u}$ das Übersetzungsverhältnis,

k ein ganzzahliger Faktor, 0, 1, 2, ...k und

$\epsilon$ der Winkel zwischen den Statormittellinien (501/502, 601/602) und den Parallelen (511/512) zur den Winkel $\alpha$ teilenden Winkelhalbierenden (52) ist.

4. Antriebsvorrichtung nach Anspruch 3, dadurch gekennzeichnet, daß der Winkel $\epsilon$ gleich Null und das Übersetzungsverhältnis $\ddot{u}$ = 2k/n ist, wobei k und n ganzzahlig sind.

5. Antriebsvorrichtung nach Anspruch 1, dadurch gekennzeichnet, daß die Zahnorientierung eines oder aller Zahnräder (211/212, 351/352, 611/612) in bezug auf die Rotormagnetisierungsachse (531/532) um einen Winkel

$$\delta_{1,2} = \alpha/2 - \epsilon - k\alpha_1$$

gegenüber der symmetrischen Normalposition mit gleichartig auf den Rotoren (271/272, 471/472, 671/672) angebrachten Zahnrädern für

$$\alpha/2 = k \cdot \alpha_1 + \epsilon$$

verdreht ist und daß auch die zugehörigen Statormittellinien (501/502, 601/602) in gleicher Richtung um den gleichen Winkel $\delta_{1,2}$ verdreht sind, wobei $\alpha_1$ der Teilungswinkel des Motorzahnrades ist mit

$$\alpha_1 = \frac{\pi \cdot m}{r_1} \quad,$$

K ein ganzzahliger Faktor 0, 1, 2, ... k und

$\epsilon$ der Winkel zwischen den Staotrmittellinien (501/502, 601/602) und den Parallelen (511/512) zur den

10

Winkel teilenden Winkelhalbierenden (52) ist.

6. Antriebsvorrichtung nach den Ansprüchen 1 bis 5, dadurch gekennzeichnet, daß die Rotoren (271/272, 471/472, 671/672) mit einer ihre Polarisierung (531/532) kennzeichnenden Markierung versehen sind.

7. Antriebsvorrichtung nach den Ansprüchen 1 bis 5, dadurch gekennzeichnet, daß beim Einsatz von für 110 V ausgelegten Motoren (251/252, 651/652) für eine Betriebsspannung von 220 V immer zwei Motoren in Reihe geschaltet werden.

8. Antriebsvorrichtung nach Anspruch 1, dadurch gekennzeichnet, daß die Zahnorientierung der Rotorzahnräder (211/212,351/352, 611/612) hinsichtlich der Magnetisierungsrichtung (531/532) der Rotoren (271/272, 471/472, 671/672) unterschiedlich ist, derart, daß bei gewünschter Orientierung der Statormittellinien (501/502, 601/602) die Einkämmbedingungen der Rotorzahnräder (211)/212, 351/352, 611/612) in das Antriebszahnrad (19, 37, 619) erfüllt sind.

9. Antriebsvorrichtung nach den Ansprüchen 2, 3 und 4, dadurch gekennzeichnet, daß sie folgende Dimensionierungsdaten erfüllt:

$\alpha = 180°$, $\beta = 90°$, $\epsilon = 0$, $\delta = 0$, $k = 7$, $n = 28$, $\ddot{u} = 1{:}2$, $z_1 = 28$, $z_2 = 56$, $m = 0{,}8$, $r_1 = 11{,}2$ mm, $r_2 = 22{,}4$ mm (Fig. 2, 3),

wobei $\beta$ der Winkel zwischen den Verbindungslinien (291/292, 691/692) der Achse (17, 38, 617) des Antriebszahnrades (19, 37, 619) und den Achsen (231/232, 341.342, 631.632) der Rotorzahnräder (211/212, 351/352, 611/612) ist und $\delta$ der Fehlwinkel ist, der sich ergibt aus

$$\delta = \frac{\alpha}{2} - k \cdot \alpha_1 - \epsilon$$

10. Antriebsvorrichtung nach den Ansprüchen 2, 3 und 4, dadurch gekennzeichneet, daß sie folgende Dimensionierungsdaten erfüllt:

$\alpha = 60°$, $\beta = 30°$, $\epsilon = 0$, $r_1 = 2{,}4$ mm, $r_2 = 19{,}2$ mm, $\ddot{u} = 1{:}8$, $k = 1$, $n = 16$, $m = 0{,}4$, $z_1 = 12$, $z_2 = 96$ (Fig. 4, 5).

11. Antriebsvorrichtung nach Anspruch 2, dadurch gekennzeichnet, daß sie folgende Dimensionierungsdaten aufweist:

$\alpha = 180°$, $\beta = 135°$, $\epsilon = -45°$ (Fig. 6).

12. Verfahren zum Zusammenbau der Antriebsvorrichtung nach den Ansprüchen 1 bis 11, dadurch gekennzeichnet, daß die Rotoren vor ihrem Kuppeln mittels eines Gleichspannungsimpulses in die gewünschte Orientierung hinsichtlich der Statorgeometrie gebracht werden.

Fig.1

Fig.2

Fig.3

Fig.5

Fig.4

Fig. 6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | DE-A-3 026 679  (PAPST-MOTOREN) <br> * Seite 1, Zeilen 4-13,31-37; Seite 4, Zeilen 20-34; Seite 7, Zeile 1 - Seite 9, Zeile 6; Figuren 1,2 * | 1-3 | H 02 K   16/00 <br> H 02 K   21/18 <br> A 47 J   43/08 |
| A | | 5,8,12 | |
| Y | DE-A-2 136 840  (MEYER) <br> * Seite 1, Zeilen 21-23; Seite 2, Zeile 9 - Seite 3, Zeile 18; Figuren 1-7 * | 1-3 | |
| A | | 5,8,10, 11 | |
| A | US-A-3 757 149  (HOLPER) <br> * Spalte 2, Zeile 18 - Spalte 4, Zeile 25; Figuren 1-3 * | 1,4,9 | |
| A | PATENT ABSTRACTS OF JAPAN, Band 6, Nr. 211 (E-137)[1089], 23. Oktober 1982; & JP-A-57 116 577 (SEIKOUSHIYA K.K.) 20-07-1982 <br> * Zusammenfassung; Figuren 1,2 * | 1 | **RECHERCHIERTE SACHGEBIETE (Int. Cl.4)** |
| A | PATENT ABSTRACTS OF JAPAN, Band 3, Nr. 117 (E-141), 29. September 1979, Seite 68 E 141; & JP-A-54 94 612 (SUWA SEIKOSHA K.K.) 26-07-1979 <br> * Zusammenfassung; Figuren * | 1 | H 02 K |
| A | FR-A-2 201 569  (ALSTHOM) <br> * Seite 2, Zeilen 27-37; Seite 4, Zelen 33-37; Figuren 1-7 * | 6 | |
| A | FR-A- 726 584  (CONSTRUCTIONS ELECTRIQUES) <br> * Seite 2, Zeilen 53-86; Figuren 5-9 * | 7 | |

Der vorliegende Recherchenbericht wurde für alle Patentansprüche erstellt

| Recherchenort | Abschlußdatum der Recherche | Prüfer |
|---|---|---|
| DEN HAAG | 01-03-1988 | TIO K.H. |